# EUROPEAN PATENT SPECIFICATION

(11) **EP 3 162 223 B1**
(45) Date of publication and mention of the grant of the patent: **13.12.2017**
(21) Application number: 15812621.9
(22) Date of filing: 21.04.2015
(51) Int. Cl.: A23L 2/66, A23L 2/52

(54) **BEVERAGE COMPOSITION**
GETRÄNKEZUSAMMENSETZUNG
COMPOSITION DE BOISSON

(30) Priority: 26.06.2014 JP 2014131717
(43) Date of publication of application: 03.05.2017
(73) Proprietor: Fujifilm Corporation, Minato-ku Tokyo 106-8620 (JP)
(72) Inventor: SATO, Masao, Ashigarakami-gun Kanagawa 258-8577 (JP)
(74) Representative: Hoffmann Eitle
(86) International application number: PCT/JP2015/062144
(87) International publication number: WO 2015/198702

(56) References cited:
- EP-A1- 2 532 252
- WO-A1-2014/010332
- CN-A- 1 351 083
- JP-A- 2002 315 548
- JP-A- 2003 238 597
- JP-A- 2006 180 812
- JP-A- 2006 217 876
- JP-A- 2011 125 329
- JP-A- 2013 081 418
- US-A1- 2009 258 833

## Description

### BACKGROUND OF THE INVENTION

### 1. Field of the Invention

The present invention relates to a beverage composition.

### 2. Description of the Related Art

Collagen is an animal protein that has been traditionally used as gelatin in the field of food products. Since collagen is a main component of dermis, connective tissues and the like, attention has been paid to collagen in the field of medicine and the field of beauty treatment. In particular, beverages with collagen blended in have been widely popular to women due to their beautifying effects.

Reported examples of beverages with collagen blended in include a beverage containing a collagen peptide and kuma bamboo grass (see, for example, JP2000-093121 A); a beauty beverage containing collagen, chondroitin, glucosamine, organic acids and the like (see, for example, JP2000-139408A); and a healthy drink containing collagen, chondroitin, hyaluronic acid, water-soluble nucleoproteins and the like (see, for example, JP2003-325149A).

In recent years, from the viewpoint of reducing unique odors, providing halal foods, and the like, the use of collagen derived from fish has been increasing. Also, in order to obtain high beautifying effects, beverages with 10,000 mg of collagen derived from fish blended in per bottle of beverage have become the mainstream beverages. However, although beverages with collagen blended in at high concentrations seem to provide excellent effects, it cannot be said that the beverages are satisfactory in view of flavor.

Regarding a technology for improving the flavor of a beverage with collagen blended in at a high concentration, JP5283743B discloses a technology of realizing a collagen peptide beverage composition having an adequate sour taste and a satisfactory flavor, with regard to a beverage having a pH of 4.0 or lower and containing a low molecular weight collagen peptide having an average molecular weight of 500 to 3,000, by using particular amounts of phosphoric acid, citric acid, tartaric acid, malic acid and the like as acidulants. Furthermore, JP5283676B discloses a technology for reducing the bitter taste caused by the terminal amino acids of a collagen peptide, by performing a masking treatment of reacting a collagen peptide having an average molecular weight of 1,200 or less, water, and a particular amount of sugars that are capable of undergoing a Maillard reaction with the amino groups in the collagen peptide under particular conditions.

### SUMMARY OF THE INVENTION

The inventors of the present invention found that one of the causes for the bitter taste given by a beverage with collagen blended in at a high concentration is the minerals originating from the raw material of collagen, such as potassium and magnesium. Regarding the bitter taste originating from such minerals, the technologies disclosed in JP5283743B and JP5283676B do not provide a sufficient suppressive effect.

Embodiments of the invention have been made in view of such circumstances as described above, and it is an object of the invention to provide a beverage composition in which an unpleasant flavor such as a bitter taste is suppressed, and the feeling of effectiveness expected from the inclusion of collagen is high, as compared to conventional beverage compositions containing collagen.

Specific means for solving the problems described above include the following aspects.
[1] A beverage composition comprising: a collagen peptide having an average molecular weight of from 1,000 to 3,000; and a reducing sugar, the beverage composition having a concentration of the collagen peptideof from 2,000 mg/10 mL to 4,000 mg/10 mL, a concentration of potassium of 3 mg/10 mL or less, and a concentration of magnesium is 0.1 mg/10 mL or less, and a content of the reducing sugar being from 0.5 parts by mass to 3 parts by mass with respect to 100 parts by mass of the collagen peptide.
[2] The beverage composition according to [1], in which the reducing sugar is at least one selected from the group consisting of fructose, maltose, glucose and lactose.
[3] The beverage composition according to [1] or [2], in which the reducing sugar includes fructose.
[4] The beverage composition according to any one of [1] to [3], in which the reducing sugar includes of fructose and maltose.
[5] The beverage composition according to any one of [1] to [4], in which the beverage composition includes a product of a Maillard reaction between the collagen peptide and the reducing sugar.
[6] The beverage composition according to any one of [1] to [5], in which the beverage composition includes a Maillard reaction product obtained by reacting the collagen peptide with the reducing sugar at a reaction temperature of from 75°C to 95°C.

According to the present specification, a numerical value range expressed using "to" means a range which includes the numerical values described before and after "to" as the minimum value and the maximum value, respectively.

According to the present specification, unless particularly stated otherwise, the amount of each component in the composition means, in a case in which multiple substances corresponding to the component exist in the composition, the total amount of the multiple substances existing in the composition.

According to the present specification, the term "process" is not intended to mean only an independent step, and even in a case in which one process is not clearly distinguishable from another process, this case is included in the meaning of the present term as long as the predetermined purpose of the process is achieved.

According to the present specification, the term "feeling of effectiveness" expected from the inclusion of collagen means that a drinker of the beverage is convinced to have expectations that the effects originating from collagen may be obtained. For example, when a full-bodied taste and an appropriate thick texture are felt in a beverage composition (hereinafter, may be referred to as "beverage"), the feeling of effectiveness expected from the inclusion of collagen is increased.

According to the present specification, the concentration of a component may be expressed as the content (for example, mass) per unit volume of the beverage. For example, the description "2,000 mg/10 mL" implies that 2,000 mg of the component is included per 10 mL of the beverage.

According to an embodiment of the invention, a beverage composition in which an unpleasant flavor such as a bitter taste is suppressed, and the feeling of effectiveness expected from the inclusion of collagen is high, as compared to conventional beverage compositions containing collagen, can be provided.

### DESCRIPTION OF THE PREFERRED EMBODIMENTS

### [Beverage composition]

The beverage composition of the present disclosure is a beverage composition including a collagen peptide having an average molecular weight of from 1,000 to 3,000 and a reducing sugar, the beverage composition having a concentration of the collagen peptide of from 2,000 mg/10 mL to 4,000 mg/10 mL, a concentration of potassium of 3 mg/10 mL or less, and a concentration of magnesium of 0.1 mg/10 mL or less, and a content of the reducing sugar being from 0.5 parts by mass to 3 parts by mass with respect to 100 parts by mass of the collagen peptide.

The beverage composition of the present disclosure may also include, as necessary, other components other than the collagen peptide having an average molecular weight of 1,000 to 3,000 and the reducing sugar, to the extent that the effects of the invention are not impaired.

In the beverage composition of the present disclosure, as a remarkable effect, a collagen peptide having a particular average molecular weight and a particular amount of a reducing sugar with respect to the collagen peptide are incorporated, and the concentration of potassium and the concentration of magnesium are adjusted to be less than or equal to particular concentrations. Therefore, even if a collagen peptide is included at a high concentration such as from 2,000 mg/10 mL to 4,000 mg/10 mL, an unpleasant flavor such as a bitter taste originating from the raw material of collagen is suppressed. Furthermore, in the beverage composition of the present disclosure, as a remarkable effect, a collagen peptide having a particular average molecular weight are incorporated at a high concentration such as from 2,000 mg/10 mL to 4,000 mg/10 mL, and a reducing sugar is incorporated in a particular amount with respect to the collagen peptide. Therefore, a full-bodied taste and appropriate thick texture are imparted to the beverage composition, and the feeling of effectiveness expected from the inclusion of collagen is increased.

### <Collagen peptide>

The beverage composition of the present disclosure includes a collagen peptide having an average molecular weight of from 1,000 to 3,000.

If the average molecular weight of the collagen peptide is less than 1,000, a full-bodied taste and an appropriate thick texture cannot be imparted to the beverage composition. Also, the beverage composition has a strong bitter taste. If the average molecular weight of the collagen peptide is more than 3,000, the thick texture of the beverage composition becomes so strong that the beverage composition is not easily drinkable.

The average molecular weight of the collagen peptide is preferably from 1,500 to 2,700, and more preferably from 1,800 to 2,500. When the average molecular weight of the collagen peptide included in the beverage composition is adjusted to from 1,800 to 2,500, the bitter taste of the beverage composition is reduced, and the thick texture related to an optimal feeling of effectiveness can be imparted to the beverage composition, which is more preferable.

The average molecular weight of the collagen peptide can be checked by gel permeation chromatography (GPC; polyethylene glycol (PEG) standards). In a case in which a commercially available product is used, the product information provided by the supplier may be followed.

The collagen peptide according to the present disclosure are proteins that are obtainable by hydrolyzing gelatin with enzymes or acid and contain a large proportion of glycine, and the collagen peptide can also be purchased as commercially available products.

The collagen may be a collagen extracted from the collagen tissue of a mammal, or may be a collagen extracted from the collagen tissues of a fish, and there are no particular limitations. From the viewpoints of the image, safety and the like of the manufactured product, the collagen is preferably a fish-derived collagen. The fish may be a saltwater fish, or may be a freshwater fish, and examples include tuna (for example, yellowfin tuna), shark, codfish, flounder, halibut, sea bream, tilapia, salmon, and catfish. The fish-derived collagen is a collagen extracted from the scales or the skin of a fish, and has a feature that the contents of proline, lysine and the like are small compared to those of collagens obtained from human being and other animals. Examples of the mammal include pig and cattle.

The amino acid composition constituting the collagen peptide and the number of amino acids according to the present disclosure are not particularly limited as long as the average molecular weight of the collagen peptide is within the range described above. Examples of the collagen peptide according to the present disclosure include oligopeptides having 2 to 6 peptide bonds, such as a collagen tripeptide having three residues of amino acids (that is, two peptide bonds).

The concentration of the collagen peptide according to the present disclosure is from 2,000 mg/10 mL to 4,000 mg/10 mL.

If the concentration of the collagen peptide is less than 2,000 mg/10 mL, a full-bodied taste and an appropriate thick texture cannot be imparted to the beverage composition. If the concentration of the collagen peptide is more than 4,000 mg/10 mL, the thick texture of the beverage composition becomes too strong, and the beverage composition is not easily drinkable.

The concentration of the collagen peptide is preferably from 2,500 mg/10 mL to 3,700 mg/10 mL, and more preferably from 3,000 mg/10 mL to 3,500 mg/10 mL.

### <Reducing sugar>

The beverage composition of the present disclosure includes a reducing sugar.

Since the beverage composition of the present disclosure includes a reducing sugar, a full-bodied taste can be obtained. Also, in regard to the beverage composition of the present disclosure, a Maillard reaction product is produced by a Maillard reaction between the collagen peptide and the reducing sugar, and thereby a full-bodied taste is enhanced.

The reducing sugar according to the present disclosure is not particularly limited. Examples of the reducing sugar according to the present disclosure include monosaccharides such as glucose (that is, glucose), fructose, galactose, mannose, idose, altose, gulose, talose, allose, xylose, arabinose, lyxose, ribose, threose, erythrose, erythrulose, xylulose, ribulose, psicose, sorbose, and tagatose; disaccharides such as maltose, lactose, and palatinose; and trisaccharides such as raffinose. Furthermore, the reducing sugar according to the present disclosure may be an oligosaccharide in which the monosaccharides described above are linked, or may also be an isomerized sugar. Examples of the oligosaccharide include a fructooligosaccharide, a maltooligosaccharide, an isomaltooligosaccharide, and a galactooligosaccharide. According to the present specification, an "oligosaccharide" means a sugar having 4 to 20 saccharide units.

The beverage composition of the present disclosure may include one kind of reducing sugar, or may include two or more kinds of reducing sugars.

The reducing sugar according to the present disclosure is preferably at least one selected from the group consisting of fructose, maltose, glucose and lactose. Furthermore, from the viewpoint of further enhancing the full-bodied taste, it is more preferable that the beverage composition of the present disclosure includes at least fructose as the reducing sugar, and it is even more preferable that the reducing sugar includes fructose and maltose.

The content of the reducing sugar according to the present disclosure is from 0.5 parts by mass to 3 parts by mass with respect to 100 parts by mass of the collagen peptide.

If the content of the reducing sugar is less than 0.5 parts by mass with respect to 100 parts by mass of the collagen peptide, a full-bodied taste cannot be imparted to the beverage composition. If the content of the reducing sugar is more than 3 parts by mass with respect to 100 parts by mass of the collagen peptide, the sweet taste of the beverage composition becomes too strong, the balance of flavor becomes poor, and the beverage composition is not easily drinkable.

In the beverage composition of the present disclosure, in order to impart a full-bodied taste with depth to the beverage composition at the time of production of the composition, a Maillard reaction may be carried out by heating the collagen peptide and the reducing sugar. In such a case, if the content of the reducing sugar is more than 3 parts by mass with respect to 100 parts by mass of the collagen peptide, this Maillard reaction proceeds too far, and the bitter taste of the beverage composition becomes rather stronger.

The content of the reducing sugar according to the present disclosure is preferably from 0.8 parts by mass to 2 parts by mass, and more preferably from 1 part by mass to 1.5 parts by mass, with respect to 100 parts by mass of the collagen peptide.

### <Potassium and magnesium>

In the beverage composition of the present disclosure, the concentration of potassium is 3 mg/10 mL or less, and the concentration of magnesium is 0.1 mg/10 mL or less.

One of the causes for the bitter taste given by a beverage with collagen blended in at a high concentration is the minerals originating from the raw material of collagen, such as potassium and magnesium.

If the concentration of potassium is more than 3 mg/10 mL, the bitter taste of the beverage composition becomes too strong, and the beverage composition is not easily drinkable. In regard to the beverage composition of the present disclosure, the concentration of potassium is preferably 2.5 mg/10 mL or less, and more preferably 2 mg/10 mL or less, and it is even more preferable that the beverage composition does not include potassium.

If the concentration of magnesium is more than 0.1 mg/10 mL, the bitter taste of the beverage composition becomes too strong, and the beverage composition is not easily drinkable. In regard to the beverage composition of the present disclosure, the concentration of magnesium is preferably 0.08 mg/10 mL or less, and more preferably 0.07 mg/10 mL or less, and it is even more preferable that the beverage composition does not include magnesium.

The potassium concentration in the beverage composition of the present disclosure can be measured using, for example, an atomic absorption luminosity apparatus (manufactured by Varian Technologies Japan, Ltd.), and the magnesium concentration can be measured using, for example, an ICP emission analyzer (product No.: SPS1200, manufactured by Seiko Instruments, Inc.).

Regarding a method for adjusting the concentration of potassium in the beverage composition to 3 mg/10 mL or less and adjusting the concentration of magnesium to 0.1 mg/10 mL or less, for example, a method of using a collagen peptide in which the contents of potassium and magnesium originating from the collagen raw material have been reduced, may be employed.

Regarding a method for reducing the contents of potassium and magnesium originating from the collagen raw material included in a collagen peptide, for example, a method of subjecting a collagen peptide to a re-ion exchange treatment may be employed.

A "re-ion exchange treatment" means, for example, a treatment using an ion exchanger. The method for treatment using an ion exchanger is not particularly limited, and any known method can be employed. Regarding the ion exchanger, an ion exchange resin is preferably used.

### <Acidulant>

The beverage composition of the present disclosure may further include an acidulant.

There are no particular limitations on the acidulant as long as it is an acidulant that can be used for beverages. Examples of the acidulant include phosphoric acid, citric acid, tartaric acid, phytic acid, malic acid, ascorbic acid, lactic acid, succinic acid, and fumaric acid. Among these, from the viewpoint of imparting an appropriate fresh sour taste to the beverage, the acidulant is preferably at least one selected from the group consisting of phosphoric acid, citric acid, tartaric acid, phytic acid, malic acid, and ascorbic acid, and more preferably at least one selected from the group consisting of phosphoric acid, citric acid, tartaric acid, phytic acid, and ascorbic acid.

In a case in which the beverage composition of the present disclosure includes an acidulant, one kind of acidulant may be included, or two or more kinds of acidulants may be included.

In a case in which the beverage composition of the present disclosure includes an acidulant, the concentration of the acidulant may be set as appropriate according to the purpose.

### <Sweetener>

The beverage composition of the present disclosure may further include a sweetener (excluding the reducing sugar mentioned above).

Examples of the sweetener include a high-sweetness sweetener, a sugar alcohol, and sucrose.

High-sweetness sweetener is a generic name for synthetic sweeteners or natural sweeteners having a sweet taste that is several ten times to several thousand times stronger than that of sugar. There are no particular limitations on the high-sweetness sweetener. Examples of the high-sweetness sweetener include aspartame, thaumatin, stevia, sucralose, acesulfame potassium.

Examples of the sugar alcohol include monosaccharide alcohols such as erythritol, xylytol, sorbitol, and mannitol; disaccharide alcohols such as maltitol, isomaltitol, and lactitol; trisaccharide alcohols such as maltotriitol, isomaltotriitol, and panitol; alcohols of tetrasaccharides or higher-saccharides, such as oligosaccharide alcohols; and sugar alcohols such as powdered and reduced maltose starch syrup.

Among these, from the viewpoint of a masking effect for an unpleasant flavor originating from collagen, the sweetener is preferably at least one selected from the group consisting of sucralose, acesulfame potassium, and erythritol.

In a case in which the beverage composition of the present disclosure includes a sweetener other than the reducing sugar, one kind of sweetener may be included, or two or more kinds of sweeteners may be included.

In a case in which the beverage composition of the present disclosure includes a sweetener other than the reducing sugar, the concentration of the sweetener may be set as appropriate according to the purpose.

### <Flavoring>

The beverage composition of the present disclosure may further include a flavoring.

Examples of the flavoring include the flavors of yogurt, sugar, lychee, peach, mango, pineapple, raspberry, blueberry, cranberry, and pear.

Among these, from the viewpoint of a masking effect for an odor originating from collagen, the flavoring is preferably a fruit-related flavoring such as lychee, peach, mango, pineapple, raspberry, blueberry, cranberry, and pear.

In a case in which the beverage composition of the present disclosure includes a flavoring, one kind of flavoring may be included, or two or more kinds of flavorings may be included.

In a case in which the beverage composition of the present disclosure includes a flavoring, the concentration of the flavoring may be set as appropriate according to the purpose.

### <Amino acid>

The beverage composition of the present disclosure may include at least one amino acid selected from the group consisting of ornithine, lysine and proline.

These amino acids are known as constituent components of collagen or synthesis promoting components for collagen, and it is expected that when the amino acids are ingested, the collagen production efficiency and utilization efficiency in the body are further increased. Particularly, in a case in which a fish-derived collagen peptide is used as the collagen peptide, it is preferable that the beverage composition includes these amino acids in order to further increase the collagen utilization efficiency in the body.

These amino acids may be in the form of an inorganic acid salt such as hydrochloride or phosphate, or may be in the form of an organic acid salt such as citrate, malate, α-ketoglutaric acid or aspartic acid.

In a case in which the beverage composition of the present disclosure includes an amino acid, the concentration of the amino acid may be set as appropriate according to the kind, content and the like of the collagen peptide.

### <Water>

It is preferable that the beverage composition of the present disclosure includes water.

There are no particular limitations on the water as long as it is water that can be used for beverages.

The content of water according to the present disclosure is preferably 80% by mass or less, more preferably 75% by mass or less, and even more preferably 70% by mass or less, with respect to the total mass of the beverage composition.

### <Other components>

The beverage composition of the present disclosure may include, as necessary, other components that can be used for beverages, in addition to the essential components such as a collagen peptide and a reducing sugar, and optional components such as an acidulant, a sweetener (excluding the reducing sugar), a flavoring, and an amino acid, to the extent that the purpose of the embodiment of the invention is not impaired.

Examples of the other components include ceramides, various vitamins, minerals, a colorant, an antioxidant, a stabilizer, a preservative, an emulsifier, and an anti-foaming agent.

### <pH of beverage composition>

The pH of the beverage composition of the present disclosure is preferably 4.0 or lower.

If the pH of the beverage composition of the present disclosure is higher than 4.0, the effect of antiseptic properties tends to deteriorate. In the case of a beverage composition having a pH of higher than 4.0, since a stronger heating treatment is needed during the production process under the Food Sanitation Law, there is a tendency that the flavor is impaired, or the components are deteriorated.

The pH of the beverage composition of the present disclosure is preferably 3.0 to 4.0, more preferably 3.2 to 4.0, and even more preferably 3.5 to 4.0.

If the pH of the beverage composition of the present disclosure is 3.0 or higher, the amount of the acidulant such as citric acid used at the time of adjusting the pH can be reduced.

The pH of the beverage composition of the present disclosure can be measured using a commercially available pH meter.

### [Method for producing beverage composition]

The method for producing the beverage composition of the present disclosure is not particularly limited, and any known method can be used. Regarding the method for producing the beverage composition of the present disclosure, for example, the production method described below may be used.

The beverage composition of the present disclosure can be produced by a method including mixing a collagen peptide having an average molecular weight of 1,000 to 3,000, in which the contents of potassium and magnesium originating from the raw material of collagen have been reduced, with a reducing sugar and optionally other components (including the optional components mentioned above) (hereinafter, may be referred to as "mixing step").

The mixing method is not particularly limited, and for example, a mixing method of mixing all the components at once may be employed, or a mixing method of mixing the above-mentioned collagen peptide and a reducing sugar with other components by slowly adding the components to water while stirring the water, may also be employed.

A preferred example of the mixing method may be a mixing method of adding the above-mentioned collagen peptide to water, mixing and dissolving the collagen peptide, subsequently adding a reducing sugar thereto, mixing and dissolving the reducing sugar, subsequently adding other components thereto, and mixing and dissolving the other components, a mixing method of adding the collagen peptide and a reducing sugar to water, mixing and dissolving the collagen peptide and the reducing sugar, subsequently adding other components thereto, and mixing and dissolving the other components, and the like.

There are no particular limitations on the mixing means, and any commercially available mixing means may be used. Examples thereof include mixing means such as a stirrer and a mixer.

The temperature employed when the various components to be included in the beverage composition of the present disclosure are mixed is not particularly limited, and may be any temperature at which the various components are sufficiently dissolved. The temperature is usually set in the range of from 20°C to 70°C.

From the viewpoint of further enhancing the full-bodied taste of the beverage composition, the temperature employed when the collagen peptide and the reducing sugar are mixed is preferably from 75°C to 95°C, more preferably from 80°C to 95°C, and even more preferably from 85°C to 95°C.

When the temperature employed when the collagen peptide and the reducing sugar are mixed is set to 75°C or higher, a Maillard reaction is likely to proceed between the amino groups in the collagen peptide and the ketone or aldehyde contained in the reducing sugar. As a result, production of the products of a Maillard reaction between the collagen peptide and the reducing sugar is promoted, and the full-bodied taste of the beverage composition is further enhanced.

When the temperature employed when the collagen peptide and the reducing sugar are mixed is set to 95°C or lower, the Maillard reaction does not proceed excessively, and the bitter taste attributable to the Maillard reaction is not easily generated.

The method for producing the beverage composition of the present disclosure may include another step other than the mixing step, as necessary. Examples of the other step include a pH adjusting step, a viscosity adjusting step, and a filtering step. Regarding the pH adjusting step, viscosity adjusting step, filtering step and the like, methods that are known in the pertinent art may be applied.

Furthermore, the method for producing the beverage composition of the present disclosure may also include a step of sealing the beverage composition of the present disclosure in a container to produce a packaged beverage, a method of sterilizing the packaged beverage, and the like. The container for sealing the beverage composition of the present disclosure may be any container that is conventionally used as a container for beverages, and examples thereof include a glass container, an aluminum can, a steel can, a pouch can, and a PET bottle.

### EXAMPLES

Hereinafter, the present invention will be explained more specifically by way of Examples; however, the invention is not intended to be limited to the following Examples as long as the gist is maintained. Unless particularly stated otherwise, the unit "parts" is on a mass basis.

### [Preparation of beverage composition]

### [Example 1]

To 10,000 mg of water, 10,000 mg of re-ion exchange-treated collagen peptide derived from fish and having an average molecular weight of 2,000 were added, and the mixture was sufficiently stirred at 60°C to dissolve the collagen peptide. After dissolution of the collagen peptide, the liquid temperature of the liquid thus obtained was raised to 85°C, and 50 mg of fructose and 50 mg of maltose were added to the heated liquid and dissolved therein. After dissolution of fructose and maltose, the liquid thus obtained was cooled until the liquid temperature decreased to 40°C. After cooling, 520 mg of ornithine hydrochloride, 0.2 mg of a ceramide-containing extract, 230 mg of citric acid, 350 mg of tartaric acid, 180 mg of phytic acid, 100 mg of phosphoric acid, 1,000 mg of erythritol, 11.2 mg of acesulfame potassium, 10.8 mg of sucralose, and 135 µL of a flavoring were added to the liquid, and the components were sufficiently dissolved. Subsequently, 425 mg of ascorbic acid was added to the liquid thus obtained and dissolved therein. After dissolution of ascorbic acid, water was added to the liquid thus obtained, and the total volume was adjusted to 30 mL. Thereby, a beverage composition of Example 1 was obtained. The pH at 25°C of the beverage composition of Example 1 thus obtained was measured, and the pH was in the range of 3.90 to 3.99.

### [Example 2]

A beverage composition of Example 2 was obtained in the same manner as in Example 1, except that the liquid temperature of the liquid obtained after dissolution of the collagen peptide in Example 1 was raised to 85°C, and 50 mg of fructose was added to the heated liquid and dissolved therein. The pH at 25°C of the beverage composition of Example 2 thus obtained was measured, and the pH was in the range of 3.90 to 3.99.

### [Example 3]

To 10,000 mg of water, 10,000 mg of re-ion exchanged collagen peptide derived from fish and having an average molecular weight of 2,000 were added, and the collagen peptide were sufficiently stirred and dissolved at 60°C. Subsequently, 100 mg of fructose was added to the liquid thus obtained and dissolved therein. After dissolution of fructose, 520 mg of ornithine hydrochloride, 0.2 mg of a ceramide-containing extract, 230 mg of citric acid, 350 mg of tartaric acid, 180 mg of phytic acid, 100 mg of phosphoric acid, 1,000 mg of erythritol, 11.2 mg of acesulfame potassium, 10.8 mg of sucralose, and 135 µL of a flavoring were added to the liquid thus obtained and sufficiently dissolved therein. Subsequently, 425 mg of ascorbic acid was added to the liquid thus obtained and dissolved therein. After dissolution of ascorbic acid, water was added to the liquid thus obtained, and the total volume was adjusted to 30 mL. Thereby, a beverage composition of Example 3 was obtained. The pH at 25°C of the beverage composition of Example 3 thus obtained was measured, and the pH was in the range of 3.90 to 3.99.

### [Example 4]

A beverage composition of Example 4 was obtained in the same manner as in Example 3, except that 10,000 mg of re-ion exchanged collagen peptide derived from fish and having an average molecular weight of 2,000 were added to 10,000 mg of water as in Example 3, the collagen peptide was sufficiently stirred and dissolved at 60°C, and then 300 mg of fructose was added to the liquid thus obtained and dissolved therein. The pH at 25°C of the beverage composition of Example 4 thus obtained was measured, and the pH was in the range of 3.90 to 3.99.

### [Example 5]

A beverage composition of Example 5 was obtained in the same manner as in Example 1, except that after dissolution of the collagen peptide in Example 1, the liquid temperature of the liquid thus obtained was raised to 70°C, and 50 mg of fructose and 50 mg of maltose were added to the heated liquid and dissolved therein. The pH at 25°C of the beverage composition of Example 5 thus obtained was measured, and the pH was in the range of 3.90 to 3.99.

### [Example 6]

A beverage composition of Example 6 was obtained in the same manner as in Example 1, except that after dissolution of the collagen peptide in Example 1, the liquid temperature of the liquid thus obtained was raised to 85°C, and 50 mg of maltose was added to the heated liquid and dissolved therein. The pH at 25°C of the beverage composition of Example 6 thus obtained was measured, and the pH was in the range of 3.90 to 3.99.

### [Example 7]

A beverage composition of Example 7 was obtained in the same manner as in Example 1, except that after dissolution of the collagen peptide in Example 1, the liquid temperature of the liquid thus obtained was raised to 85°C, and 50 mg of glucose was added to the heated liquid and dissolved therein. The pH at 25°C of the beverage composition of Example 7 thus obtained was measured, and the pH was in the range of 3.90 to 3.99.

### [Example 8]

A beverage composition of Example 8 was obtained in the same manner as in Example 1, except that after dissolution of the collagen peptide in Example 1, the liquid temperature of the liquid thus obtained was raised to 85°C, and 50 mg of lactose was added to the heated liquid and dissolved therein. The pH at 25°C of the beverage composition of Example 8 thus obtained was measured, and the pH was in the range of 3.90 to 3.99.

### [Example 9]

A beverage composition of Example 9 was obtained in the same manner as in Example 1, except that after dissolution of the collagen peptide in Example 1, the liquid temperature of the liquid thus obtained was raised to 80°C, and 50 mg of fructose and 50 mg of maltose were added to the heated liquid and dissolved therein. The pH at 25°C of the beverage composition of Example 9 thus obtained was measured, and the pH was in the range of 3.90 to 3.99.

### [Example 10]

A beverage composition of Example 10 was obtained in the same manner as in Example 1, except that after dissolution of the collagen peptide in Example 1, the liquid temperature of the liquid thus obtained was raised to 90°C, and 50 mg of fructose and 50 mg of maltose were added to the heated liquid and dissolved therein. The pH at 25°C of the beverage composition of Example 10 thus obtained was measured, and the pH was in the range of 3.90 to 3.99.

### [Example 11]

A beverage composition of Example 11 was obtained in the same manner as in Example 1, except that after dissolution of the collagen peptide in Example 1, the liquid temperature of the liquid thus obtained was raised to 95°C, and 50 mg of fructose and 50 mg of maltose were added to the heated liquid and dissolved therein. The pH at 25°C of the beverage composition of Example 11 thus obtained was measured, and the pH was in the range of 3.90 to 3.99.

### [Example 12]

A beverage composition of Example 12 was obtained in the same manner as in Example 1, except that after dissolution of the collagen peptide in Example 1, the liquid temperature of the liquid thus obtained was raised to 85°C, and 250 mg of fructose was added to the heated liquid and dissolved therein. The pH at 25°C of the beverage composition of Example 12 thus obtained was measured, and the pH was in the range of 3.90 to 3.99.

### [Example 13]

A beverage composition of Example 13 was obtained in the same manner as in Example 1, except that the total volume in Example 1 was adjusted to 50 mL. The pH at 25°C of the beverage composition of Example 13 thus obtained was measured, and the pH was in the range of 3.90 to 3.99.

### [Example 14]

A beverage composition of Example 14 was obtained in the same manner as in Example 2, except that the total volume in Example 2 was adjusted to 50 mL. The pH at 25°C of the beverage composition of Example 14 thus obtained was measured, and the pH was in the range of 3.90 to 3.99.

### [Comparative Example 1]

To 10,000 mg of water, 10,000 mg of collagen peptide derived from fish and having an average molecular weight of 900 were added, and the collagen peptide were sufficiently stirred and dissolved at 60°C. After dissolution of the collagen peptide, 520 mg of ornithine hydrochloride, 0.2 mg of a ceramide-containing extract, 230 mg of citric acid, 350 mg of tartaric acid, 180 mg of phytic acid, 100 mg of phosphoric acid, 1,000 mg of erythritol, 11.2 mg of acesulfame potassium, 10.8 mg of sucralose, and 135 µL of a flavoring were added to the liquid thus obtained and sufficiently dissolved therein. Subsequently, 425 mg of ascorbic acid was added to the liquid thus obtained and dissolved therein. After dissolution of ascorbic acid, water was added to the liquid thus obtained, and the total volume was adjusted to 30 mL. Thereby, a beverage composition of Comparative Example 1 was obtained. The pH at 25°C of the beverage composition of Comparative Example 1 thus obtained was measured, and the pH was in the range of 3.90 to 3.99.

### [Comparative Example 2]

A beverage composition of Comparative Example 2 was obtained in the same manner as in Comparative Example 1, except that 10,000 mg of a collagen peptide derived from fish and having an average molecular weight of 2,000 were added to 10,000 mg of water as in Comparative Example 1, and the collagen peptide were sufficiently stirred and dissolved at 60°C. The pH at 25°C of the beverage composition of Comparative Example 2 thus obtained was measured, and the pH was in the range of 3.90 to 3.99.

### [Comparative Example 3]

A beverage composition of Comparative Example 3 was obtained in the same manner as in Comparative Example 1, except that 10,000 mg of a re-ion exchanged collagen peptide derived from fish and having an average molecular weight of 2,000 were added to 10,000 mg of water as in Comparative Example 1, and the collagen peptide were sufficiently stirred and dissolved at 60°C. The pH at 25°C of the beverage composition of Comparative Example 3 thus obtained was measured, and the pH was in the range of 3.90 to 3.99.

### [Comparative Example 4]

A beverage composition of Comparative Example 4 was obtained in the same manner as in Comparative Example 1, except that 10,000 mg of a collagen peptide derived from fish and having an average molecular weight of 4,000 were added to 10,000 mg of water as in Comparative Example 1, and the collagen peptide were sufficiently stirred and dissolved at 60°C. The pH at 25°C of the beverage composition of Comparative Example 4 thus obtained was measured, and the pH was in the range of 3.90 to 3.99.

### [Comparative Example 5]

A beverage composition of Comparative Example 5 was obtained in the same manner as in Example 1, except that after dissolution of the collagen peptide in Example 1, the liquid temperature of the liquid thus obtained was raised to 85°C, and 500 mg of fructose was added to the heated liquid and dissolved therein. The pH at 25°C of the beverage composition of Comparative Example 5 thus obtained was measured, and the pH was in the range of 3.90 to 3.99.

### [Comparative Example 6]

A beverage composition of Comparative Example 6 was obtained in the same manner as in Example 1, except that after dissolution of the collagen peptide in Example 1, the liquid temperature of the liquid thus obtained was raised to 85°C, and 1,000 mg of fructose was added to the heated liquid and dissolved therein. The pH at 25°C of the beverage composition of Comparative Example 6 thus obtained was measured, and the pH was in the range of 3.90 to 3.99.

### [Comparative Example 7]

A beverage composition of Comparative Example 7 was obtained in the same manner as in Example 1, except that 10,000 mg of a collagen peptide derived from fish and having an average molecular weight of 900 were added to 10,000 mg of water as in Example 1, and the collagen peptide were sufficiently stirred and dissolved at 60°C. The pH at 25°C of the beverage composition of Comparative Example 7 thus obtained was measured, and the pH was in the range of 3.90 to 3.99.

### [Comparative Example 8]

A beverage composition of Comparative Example 8 was obtained in the same manner as in Example 1, except that 10,000 mg of a collagen peptide derived from fish and having an average molecular weight of 2,000 were added to 10,000 mg of water as in Example 1, and the collagen peptide were sufficiently stirred and dissolved at 60°C. The pH at 25°C of the beverage composition of Comparative Example 8 thus obtained was measured, and the pH was in the range of 3.90 to 3.99.

### [Comparative Example 9]

A beverage composition of Comparative Example 9 was obtained in the same manner as in Example 1, except that 10,000 mg of a collagen peptide derived from fish and having an average molecular weight of 4,000 were added to 10,000 mg of water as in Example 1, and the collagen peptide were sufficiently stirred and dissolved at 60°C. The pH at 25°C of the beverage composition of Comparative Example 9 thus obtained was measured, and the pH was in the range of 3.90 to 3.99.

### [Measurement of potassium concentration and magnesium concentration]

The concentration of potassium in each of the beverage compositions of Example 1 to Example 14 and Comparative Example 1 to Comparative Example 9 was measured using an atomic absorption luminosity apparatus (manufactured by Varian Technologies Japan, Ltd.), and the concentration of magnesium was measured using an ICP emission analyzer (product No.: SPS1200, manufactured by Seiko Instruments, Inc.). The results are presented in Table 1 and Table 2.

### [Evaluation]

For each of the beverage compositions of Example 1 to Example 14 and Comparative Example 1 to Comparative Example 9, an evaluation on a full-bodied taste, a thick texture, a bitter taste, and a balance of these was performed.

The evaluation was performed by a sensory evaluation after 10 panelists were asked to drink each of the beverage compositions of Examples and Comparative Examples. The evaluation was carried out as a 5-grade evaluation from grade 1 to grade 5.

The full-bodied taste was scored from the viewpoint of the feeling of effectiveness expected from the inclusion of a collagen peptide. Each panelist scored "5" in a case in which the panelist felt that the full-bodied taste originating from the collagen peptide was deep, and the beverage composition was rich, and scored "1" in a case in which the panelist felt that there was no depth in the full-bodied taste originating from the collagen peptide, and the beverage composition was plain. Thus, the panelists determined which grade among the five grades from 1 to 5 each beverage composition corresponded to.

The thick texture was scored from the viewpoints of the feeling of effectiveness expected from the inclusion of a collagen peptide, and softness. Each panelist scored "5" in a case in which a thick texture was strongly felt to the extent the feel of drinking was not impaired, and scored "1" in a case in which the thick texture was so weak that the effect expected from the inclusion of a collagen peptide was hardly felt, or in a case in which the thick texture was too strong, and the feel of drinking felt poor. Thus, the panelists determined which grade among the five grades from 1 to 5 each beverage composition corresponded to.

The bitter taste was scored based on the intensity of the bitter taste. Each panelist scored "5" in a case in which the panelist felt that the bitter taste was very weak or did not feel any bitter taste, and scored "1" in a case in which the bitter taste was felt very strongly. Thus, the panelists determined which grade among the five grades from 1 to 5 each beverage composition corresponded to.

The balance was scored based on the balance between the full-bodied taste, thick texture, sweet taste and bitter taste. As the balance between the full-bodied taste, thick texture, sweet taste and bitter taste was better, the score was closer to "5", and as the overall balance was poor, such as that any one of the evaluation results for the full-bodied taste, thick texture, sweet taste and bitter taste stood out, the score was closer to "1". Among the full-bodied taste, thick texture, sweet taste and bitter taste, the bitter taste is highly weighted in the evaluation on the balance, compared to the rest.

The evaluation results are presented in Table 1 and Table 2. The evaluation results indicated in Table 1 and Table 2 were obtained by averaging the score results, and rounding off to the nearest whole number.

In Table 1 and Table 2, the "collagen peptide derived from fish and having an average molecular weight of 900" is described as "collagen peptide A"; the "collagen peptide derived from fish and having an average molecular weight of 2,000" is described as "collagen peptide B"; the "re-ion exchanged collagen peptide derived from fish and having an average molecular weight of 2,000" is described as "collagen peptide C"; and the "collagen peptide derived from fish and having an average molecular weight of 4,000" is described as "collagen peptide D".

In Table 1 and Table 2, the symbol "-" means that the relevant component was not incorporated.

[Table 1]

| | Example 1 | Example 2 | Examples 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| Collagen peptide A | - | - | - | - | - | - | - | - | - | - | - | - | - | - |
| Collagen peptide B | - | - | - | - | - | - | - | - | - | - | - | - | - | - |
| Collagen peptide C | 10,000 mg | 10,000 mg | 10,000 mg | 10,000 mg | 10,000 mg | 10,000 mg | 10,000 mg | 10,000 mg | 10,000 mg | 10,000 mg | 10,000 mg | 10,000 mg | 10,000 mg | 10,000 mg |
| Collagen peptide D | - | - | - | - | - | - | - | - | - | - | - | - | - | - |
| | | | | | | | | | | | | | | |
| Fructose | 50 mg | 50 mg | 100 mg | 300 mg | 50 mg | - | - | - | 50 mg | 50 mg | 50 mg | 250 mg | 50 mg | 50 mg |
| Maltose | 50 mg | - | - | - | 50 mg | 50 mg | - | - | 50 mg | 50 mg | 50 mg | - | 50 mg | - |
| Glucose | - | - | - | - | - | - | 50 mg | - | - | - | - | - | - | - |
| Lactose | - | - | - | - | - | - | - | 50mg | - | - | - | - | - | - |
| Water | 10,000 mg | 10,000 mg | 10,000 mg | 10,000 mg | 10,000 mg | 10,000 mg | 10,000 mg | 10,000 mg | 10,000 mg | 10,000 mg | 10,000 mg | 10,000 mg | 10,000 mg | 10,000 mg |
| Heating | 85°C | 85°C | None | None | 70°C | 85°C | 85°C | 85°C | 80°C | 90°C | 95°C | 85°C | 85°C | 85°C |
| | | | | | | | | | | | | | | |
| Ascorbic acid | 425 mg | 425 mg | 425 mg | 425 mg | 425 mg | 425 mg | 425 mg | 425 mg | 425 mg | 425 mg | 425 mg | 425 mg | 425 mg | 425 mg |
| Ornithine hydrochloride | 520 mg | 520 mg | 520 mg | 520 mg | 520 mg | 520 mg | 520 mg | 520 mg | 520 mg | 520 mg | 520 mg | 520 mg | 520 mg | 520 mg |
| Ceramide-containing extract | 0.2 mg | 0.2 mg | 0.2 mg | 0.2 mg | 0.2 mg | 0.2 mg | 0.2 mg | 0.2 mg | 0.2 mg | 0.2 mg | 0.2 mg | 0.2 mg | 0.2 mg | 0.2 mg |
| Citric acid | 230 mg | 230 mg | 230 mg | 230 mg | 230 mg | 230 mg | 230 mg | 230 mg | 230 mg | 230 mg | 230 mg | 230 mg | 230 mg | 230 mg |
| Tartaric acid | 350 mg | 350 mg | 350 mg | 350 mg | 350 mg | 350 mg | 350 mg | 350 mg | 350 mg | 350 mg | 350 mg | 350 mg | 350 mg | 350 mg |
| Phytic acid | 180 mg | 180 mg | 180 mg | 180 mg | 180 mg | 180 mg | 180 mg | 180 mg | 180 mg | 180 mg | 180 mg | 180 mg | 180 mg | 180 mg |
| Phosphoric acid | 100 mg | 100 mg | 100 mg | 100 mg | 100 mg | 100 mg | 100 mg | 100 mg | 100 mg | 100 mg | 100 mg | 100 mg | 100 mg | 100 mg |
| | | | | | | | | | | | | | | |
| Erythritol | 1,000 mg | 1,000 mg | 1,000 mg | 1,000 mg | 1,000 mg | 1,000 mg | 1,000mg | 1,000 mg | 1,000 mg | 1,000 mg | 1,000 mg | 1,000 mg | 1,000 mg | 1,000 mg |
| Acesulfame potassium | 11.2 mg | 11.2 mg | 11.2 mg | 11.2 mg | 11.2 mg | 11.2 mg | 11.2 mg | 11.2 mg | 11.2 mg | 11.2 mg | 11.2 mg | 11.2 mg | 11.2 mg | 11.2 mg |
| Sucralose | 10.8 mg | 10.8 mg | 10.8 mg | 10.8 mg | 10.8 mg | 10.8 mg | 10.8 mg | 10.8 mg | 10.8 mg | 10.8 mg | 10.8 mg | 10.8 mg | 10.8 mg | 10.8 mg |
| Flavoring | 135 µL | 135 µL | 135 µL | 135 µL | 135 µL | 135 µL | 135 µL | 135 µL | 135 µL | 135 µL | 135 µL | 135 µL | 135 µL | 135 µL |
| | | | | | | | | | | | | | | |
| Water (for liquid amount adjustment) | Adequate amount | Adequate amount | Adequate amount | Adequate amount | Adequate amount | Adequate amount | Adequate amount | Adequate amount | Adequate amount | Adequate amount | Adequate amount | Adequate amount | Adequate amount | Adequate amount |
| Citric acid (for pH adjustment) | Adequate amount | Adequate amount | Adequate amount | Adequate amount | Adequate amount | Adequate amount | Adequate amount | Adequate amount | Adequate amount | Adequate amount | Adequate amount | Adequate amount | Adequate amount | Adequate amount |
| | | | | | | | | | | | | | | |
| Final liquid amount | 30 mL | 30 mL | 30 mL | 30 mL | 30 mL | 30 mL | 30 mL | 30 mL | 30 mL | 30 mL | 30 mL | 30 mL | 50 mL | 50 mL |
| pH | 3.90 to 3.99 | 3.90 to 3.99 | 3.90 to 3.99 | 3,90 to 3.99 | 3.90 to 3.99 | 3.90 to 3.99 | 3.90 to 3.99 | 3.90 to 3.99 | 3.90 to 3.99 | 3.90 to 3.99 | 3.90 to 3.99 | 3.90 to 3.99 | 3.90 to 3.99 | 3.90 to 3.99 |
| | | | | | | | | | | | | | | |
| Potassium concentration (mg/10 mL) | 1.7 | 1.7 | 1.7 | 1.7 | 1.7 | 1.7 | 1.7 | 1.7 | 1.7 | 1.7 | 1.7 | 1.7 | 1.7 | 1.7 |
| Magnesium concentration (mg/10 mL) | 0.07 | 0.07 | 0.07 | 0.07 | 0.07 | 0.07 | 0.07 | 0.07 | 0.07 | 0.07 | 0.07 | 0.07 | 0.07 | 0.07 |
| | | | | | | | | | | | | | | |
| Full-bodied taste | 5 | 4 | 3 | 3 | 3 | 3 | 4 | 3 | 4 | 5 | 5 | 5 | 4 | 3 |
| Thick texture | 5 | 5 | 5 | 5 | 5 | 5 | 5 | 5 | 5 | 5 | 5 | 5 | 3 | 3 |
| Bitter taste | 5 | 5 | 5 | 5 | 5 | 5 | 4 | 5 | 5 | 4 | 3 | 3 | 5 | 5 |
| Balance | 5 | 5 | 4 | 4 | 4 | 4 | 4 | 4 | 4 | 4 | 3 | 3 | 4 | 4 |

**[Table 2]**

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Collagen peptide A | 10, 000 mg | - | - | - | - | - | 10,000 mg | - | - |
| Collagen peptide B | - | 10,000 mg | - | - | - | - | - | 10,000 mg | - |
| Collagen peptide C | - | - | 10,000 mg | - | 10,000 mg | 10,000 mg | - | - | - |
| Collagen peptide D | - | - | - | 10,000 mg | - | - | - | - | 10,000 mg |
| | | | | | | | | | |
| Fructose | - | - | - | - | 500 mg | 1,000 mg | 50 mg | 50 mg | 50 mg |
| Maltose | - | - | - | - | - | - | 50 mg | 50 mg | 50 mg |
| Glucose | - | - | - | - | - | - | - | - | - |
| Lactose | - | - | - | - | - | - | - | - | - |
| Water | 10,000 mg | 10,000 mg | 10,000 mg | 10,000 mg | 10,000 mg | 10,000 mg | 10,000 mg | 10,000 mg | 10,000 mg |
| Heating | None | None | None | None | 85°C | 85°C | 85°C | 85°C | 85°C |
| | | | | | | | | | |
| Ascorbic acid | 425 mg | 425 mg | 425 mg | 425 mg | 425 mg | 425 mg | 425 mg | 425 mg | 425 mg |
| Ornithine hydrochloride | 520 mg | 520 mg | 520 mg | 520 mg | 520 mg | 520 mg | 520 mg | 520 mg | 520 mg |
| Ceramide-containing extract | 0.2 mg | 0.2 mg | 0.2 mg | 0.2 mg | 0.2 mg | 0.2 mg | 0.2 mg | 0.2 mg | 0.2 mg |
| Citric acid | 230 mg | 230 mg | 230 mg | 230 mg | 230 mg | 230 mg | 230 mg | 230 mg | 230 mg |
| Tartaric acid | 350 mg | 350 mg | 350 mg | 350 mg | 350 mg | 350 mg | 350 mg | 350 mg | 350 mg |
| Phytic acid | 180 mg | 180 mg | 180 mg | 180 mg | 180 mg | 180 mg | 180 mg | 180 mg | 180 mg |
| Phosphoric acid | 100 mg | 100 mg | 100 mg | 100 mg | 100 mg | 100 mg | 100 mg | 100 mg | 100 mg |
| | | | | | | | | | |
| Erythritol | 1,000 mg | 1,000 mg | 1,000 mg | 1,000 mg | 1,000 mg | 1,000 mg | 1,000 mg | 1,000 mg | 1,000 mg |
| Acesulfame potassium | 11.2 mg | 11.2 mg | 11.2 mg | 11.2 mg | 11.2 mg | 11.2 mg | 11.2 mg | 11.2 mg | 11.2 mg |
| Sucralose | 10.8 mg | 10.8 mg | 10.8 mg | 10.8 mg | 10.8 mg | 10.8 mg | 10.8 mg | 10.8 mg | 10.8 mg |
| Flavoring | 135 µL | 135 µL | 135 µL | 135 µL | 135 µL | 135 µL | 135 µL | 135 µL | 135 µL |
| | | | | | | | | | |
| Water (for liquid amount adjustment) | Adequate amount | Adequate amount | Adequate amount | Adequate amount | Adequate amount | Adequate amount | Adequate amount | Adequate amount | Adequate amount |
| Citric acid (for pH adjustment) | Adequate amount | Adequate amount | Adequate amount | Adequate amount | Adequate amount | Adequate amount | Adequate amount | Adequate amount | Adequate amount |
| | | | | | | | | | |
| Final liquid amount | 30 mL | 30 mL | 30 mL | 30 mL | 30 mL | 30 mL | 30 mL | 30 mL | 30 mL |
| pH | 3.90 to 3.99 | 3.90 to 3.99 | 3.90 to 3.99 | 3.90 to 3.99 | 3.90 to 3.99 | 3.90 to 3.99 | 3.90 to 3.99 | 3.90 to 3.99 | 3.90 to 3.99 |
| | | | | | | | | | |
| Potassium concentration (mg/10 mL) | 2.8 | 11.4 | 1.7 | 2.6 | 1.7 | 1.7 | 2.8 | 11.4 | 2.6 |
| Magnesium concentration (mg/10 mL) | 0.25 | 0.40 | 0.07 | 0.09 | 0.07 | 0.07 | 0.25 | 0.40 | 0.09 |
| | | | | | | | | | |
| Full-bodied taste | 1 | 2 | 2 | 3 | 3 | 3 | 1 | 4 | 4 |
| Thick texture | 2 | 5 | 5 | 2 | 5 | 5 | 2 | 5 | 2 |
| Bitter taste | 1 | 2 | 4 | 5 | 2 | 1 | 1 | 2 | 5 |
| Balance | 1 | 2 | 3 | 2 | 2 | 2 | 1 | 3 | 3 |

As shown in Table 1, all of the various beverage compositions of Example 1 to Example 14 were beverage compositions that exhibited a reduced bitter taste, an appropriate thick texture, a high full-bodied taste, and a high feeling of effectiveness expected from the inclusion of a collagen peptide.

On the contrary, the respective beverage compositions of Comparative Example 1 to Comparative Example 9 were beverage compositions that exhibited a strong bitter taste, or if the bitter taste was reduced, exhibited a strong thick texture and a poor feel of drinking, as shown in Table 2.

The beverage composition of Example 2 containing fructose as the reducing sugar exhibited a high full-bodied taste compared to the beverage composition of Example 6 containing maltose as the reducing sugar and the beverage composition of Example 8 containing lactose. The beverage composition of Example 7 containing glucose as the reducing sugar exhibited a full-bodied taste that was equivalent to that of the beverage composition of Example 2 containing fructose as the reducing sugar; however, suppression of a bitter taste was achieved to a slightly lower extent compared to the beverage composition of Example 2.

The beverage composition of Example 1 that used fructose and maltose were used together as the reducing sugar exhibited a high full-bodied taste compared to the beverage composition of Example 2 containing fructose only as the reducing sugar and the beverage composition of Example 6 containing maltose only as the reducing sugar.

In the beverage compositions of Comparative Example 1 to Comparative Example 3 that did not contain any reducing sugar, a sufficient full-bodied taste was not obtained in all cases. The beverage composition of Comparative Example 4 that did not contain a reducing sugar contained a collagen peptide having an average molecular weight of 4,000, and thus a full-bodied taste was obtained; however, the thick texture became too strong, and the overall balance was poor.

The beverage compositions of Comparative Example 5 and Comparative Example 6 in which the amount of the reducing sugar was too large with respect to the collagen peptide exhibited a strong sweet taste. Furthermore, in the beverage compositions of Comparative Example 5 and Comparative Example 6, since the collagen peptide and an excess amount of a reducing sugar were mixed under a temperature condition of 85°C, the bitter taste that was suspected to have been caused by an excessive progress of a Maillard reaction, became strong.

In the beverage composition of Comparative Example 7 containing a collagen peptide having an average molecular weight of 900, the full-bodied taste and the thick texture were of a very low extent, and the bitter taste was strong. The beverage composition of Comparative Example 8 containing a collagen peptide that was not re-ion exchanged and had an average molecular weight of 2,000 had high concentrations of potassium and magnesium and had a strong bitter taste.

It was recognized that as the heating temperature at the time of mixing the collagen peptide and the reducing sugar together was higher, the full-bodied taste of the beverage composition tended to be enhanced. However, there was also recognized a tendency that as the heating temperature increased, a bitter taste suspected to be caused by the progress of a Maillard reaction was produced (Example 1, Example 5, and Example 9 to Example 11).

## Claims

1. A beverage composition comprising:
a collagen peptide having an average molecular weight of from 1,000 to 3,000; and
a reducing sugar,
the beverage composition having a concentration of the collagen peptide of from 2,000 mg/10 mL to 4,000 mg/10 mL, a concentration of potassium of 3 mg/10 mL or less, and a concentration of magnesium of 0.1 mg/10 mL or less, and a content of the reducing sugar being from 0.5 parts by mass to 3 parts by mass with respect to 100 parts by mass of the collagen peptide.

2. The beverage composition according to claim 1, wherein the reducing sugar is at least one selected from the group consisting of fructose, maltose, glucose and lactose.

3. The beverage composition according to claim 1 or 2, wherein the reducing sugar comprises fructose.

4. The beverage composition according to any one of claims 1 to 3, wherein the reducing sugar includes fructose and maltose.

5. The beverage composition according to any one of claims 1 to 4, wherein the beverage composition comprises a product of a Maillard reaction between the collagen peptide and the reducing sugar.

6. The beverage composition according to any one of claims 1 to 5, wherein the beverage composition comprises a Maillard reaction product obtained by reacting the collagen peptide with the reducing sugar at a reaction temperature of from 75°C to 95°C.

## Patentansprüche

1. Getränkezusammensetzung, enthaltend:
ein Kollagenpeptid mit einem durchschnittlichen Molekulargewicht von 1000 bis 3000 und
einen reduzierenden Zucker,
worin die Getränkezusammensetzung eine Konzentration des Kollagenpeptides von 2000 mg/10 ml bis 4000 mg/10 ml, eine Konzentration von Kalium von 3 mg/10 ml oder weniger und eine Konzentration von Magnesium von 0,1 mg/10 ml oder weniger hat und ein Gehalt des reduzierenden Zuckers von 0,5 bis 3 Massenteile in Bezug auf 100 Massenteile des Kollagenpeptides ist.

2. Getränkezusammensetzung nach Anspruch 1, worin der reduzierende Zucker zumindest einer ist, ausgewählt aus der Gruppe bestehend aus Fructose, Maltose, Glucose und Lactose.

3. Getränkezusammensetzung nach Anspruch 1 oder 2, worin der reduzierende Zucker Fructose enthält.

4. Getränkezusammensetzung nach einem der Ansprüche 1 bis 3, worin der reduzierende Zucker Fructose und Maltose enthält.

5. Getränkezusammensetzung nach einem der Ansprüche 1 bis 4, worin die Getränkezusammensetzung ein Produkt einer Maillard-Reaktion zwischen dem Kollagenpeptid und dem reduzierenden Zucker enthält.

6. Getränkezusammensetzung nach einem der Ansprüche 1 bis 5, worin die Getränkezusammensetzung ein Maillard-Reaktionsprodukt enthält, erhalten durch Reaktion des Kollagenpeptides mit dem reduzierenden Zucker bei einer Reaktionstemperatur von 75°C bis 95°C.

## Revendications

1. Composition de boisson comprenant :
un peptide de collagène ayant un poids moléculaire moyen de 1000 à 3000; et
un sucre réducteur,
la composition de boisson ayant une concentration du peptide de collagène de 2000 mg/10 mL à 4000 mg/10 mL, une concentration de potassium de 3 mg/10 mL ou moins, et une concentration de magnésium de 0,1 mg/10 ml ou moins, et une teneur du sucre réducteur allant de 0,5 partie en masse à 3 parties en masse par rapport à 100 parties en masse du peptide de collagène.

2. Composition de boisson selon la revendication 1, dans laquelle le sucre réducteur est au moins un choisi dans le groupe constitué par le fructose, le maltose, le glucose et le lactose.

3. Composition de boisson selon la revendication 1 ou 2, dans laquelle le sucre réducteur comprend du fructose.

4. Composition de boisson selon l'une quelconque des revendications 1 à 3, dans laquelle le sucre réducteur comprend du fructose et du maltose.

5. Composition de boisson selon l'une quelconque des revendications 1 à 4, dans laquelle la composition de boisson comprend un produit d'une réaction de Maillard entre le peptide de collagène et le sucre réducteur.

6. Composition de boisson selon l'une quelconque des revendications 1 à 5, dans laquelle la composition de boisson comprend un produit de réaction de Maillard obtenu en faisant réagir le peptide de collagène avec le sucre réducteur à une température de réaction de 75°C à 95 °C.
